# EUROPÄISCHE PATENTSCHRIFT

(11) **EP 1 630 191 B1**
(45) Veröffentlichungstag und Bekanntmachung des Hinweises auf die Patenterteilung: **21.01.2009**
(21) Anmeldenummer: 05106644.7
(22) Anmeldetag: 20.07.2005
(51) Int. Cl.: C08J 3/12, C08L 75/02, B01D 1/18, C10M 119/24

(54) **Verfahren zur Herstellung pulverförmiger (Poly)harnstoffe mittels Sprühtrocknung**
Process for the preparation of particulate polyurea by spray drying
Procédé pour la préparation de polyurées pulvérulentes par séchage par pulvérisation

(30) Priorität: 11.08.2004 DE 102004039157; 14.09.2004 DE 102004044878
(43) Veröffentlichungstag der Anmeldung: 01.03.2006
(73) Patentinhaber: Rhein Chemie Rheinau GmbH, 68219 Mannheim (DE)
(72) Erfinder: Kray, Bernd Dr., 67346, Speyer (DE); Laufer, Wilhelm Dr., 68165, Mannheim (DE); Galda, Patrick Dr., 76149, Karlsruhe (DE); Feßenbecker, Achim Dr., 68753, Waghäusel (DE)
(74) Vertreter: Gille Hrabal Struck Neidlein Prop Roos

(56) Entgegenhaltungen:
- EP-A- 0 501 348
- WO-A-02/02683
- WO-A-02/04579
- US-A- 4 489 017

## Beschreibung

Die vorliegende Erfindung betrifft ein Verfahren zur Herstellung von (Poly)harnstoffpulvern, neue (Poly)harnstoffpulver, sie enthaltende Zusammensetzungen sowie deren Verwendung als Verdickungsmittel, insbesondere in Schmierstoffen, wie sogenannten Polyharnstofffetten.

Sogenannte Polyharnstofffette, die Polyharnstoffe als Verdickungsmittel in Basisölen enthalten, werden nach dem Stand der Technik nach wie vor fast ausschließlich nach dem sogenannten "in-situ"-Verfahren hergestellt. Bei dem "in-situ"-Verfahren wird der Polyharnstoff-Verdicker "in-situ" durch Polyaddition von in Solvent oder Mineralöl gelöstem Polyisocyanat und ebenfalls in Mineralöl oder Solvent gelösten Polyaminen erzeugt. Der hierbei entstehende Polyharnstoff liegt in verteilter, vorgequollener Form vor und bildet nach Abzug des Lösemittels in dem Basisöl (Mineralöl) eine gallertartige, strukturierte Paste, die nach weiterer Homogenisierung ein homogenes Fett bildet. Dieses Verfahren weist den Nachteil auf, dass das erhaltene Produkt Verunreinigungen aufgrund der Reaktion enthält. Besonders kritisch ist hier das TDI. Für die Durchführung des "in-situ"-Verfahrens sind somit besondere Genehmigungsverfahren erforderlich. Weitere Nachteile sind, dass die Steuerung der Reaktion aufgrund der hohen Viskositäten beim "in-situ"-Verfahren problematisch ist, Es kann zu Inhomogenitäten innerhalb der Reaktionsmassen kommen. Weiterhin kann es zu Problemen bei der Temperaturabführung kommen, da die Polyadditionsreaktion exoterm verläuft, Dieser sogenannte "in-situ"-Stand der Technik wird ausführlich in der EP 0534248 A1 referiert, auf die Bezug genommen wird.

Die Nachteile des vorstehend erwähnten Stands der Technik versucht das Verfahren der EP 0534248 A1 zu überkommen, bei dem zunächst die Polyaddition zum Polyharnstoff in einem Lösemittel (u.a. Toluol, Butanol, Essigester, Chloroform etc.) oder lösemittelfrei durch Extrusion durchgeführt wird, Der gewonnene Feststoff wird im weiteren nachbearbeitet, d.h. getrocknet (Abnutschen bzw. Abdampfen bzw, Abziehen des Lösemittels), danach gemahlen und schließlich zum Fett umgesetzt. Bei dem in der EP 0534248 A1 beschriebenen Verfahren werden zunächst Polyharnstoffe durch Umsetzung von Polyisocyanaten mit Aminen hergestellt, diese anschließend nach vollständigem Durchreagieren im trockenen Zustand zu Pulvern vermahlen und das gemahlene Rohprodukt nach Anteigen in einem Grundöl in einem Hochdruckhomogenisator zu einem "PU-Fett" verarbeitet. Der Nachteil dieses Verfahrens besteht darin, dass die durch das Vermahlen erhaltenen Pulver relativ grobkörnig sind. Dies führt zu Nachteilen bei der Einarbeitung der Polyharnstoffpulver in die Basisflüssigkeiten. In diesem Verfahren ist daher die Anwendung eines Hochdruckhomogenisators unter hohen Drücken von mehr als 500 bar obligatorisch. Das Verfahren erfordert somit einen hohen Energieeinsatz,

Ähnlich erfordert das Verfahren der WO 02/04579 mit dem ein Polyharnstofffett mit Niedriggeräusch-Eigenschaften bereitgestellt werden soll, ein Scherverfahren mit dem die Partikelgröße der Verdickerpartikel auf weniger als 500 µm verringert wird. Bevorzugt werden die Partikelgrößen durch das Scherverfahren soweit verringert, dass alle Partikel weniger als 100 µm mit 95 % der Partikel mit weniger als 50 µm aufweisen. Die Herstellung noch feinteiligerer Polyharnstoffsuspensionen ist nach den dort beschriebenen Verfahren mit vertretbarem Energieeinsatz jedoch nicht möglich. Die WO 02/04579 beschreibt überdies keine feinteiligen getrockneten Polyharnstoffpulver, die beispielsweise beim Abnehmer vor Ort in Basisöle eingearbeitet werden können.

Aus der WO 02/02683 sind Kautschuk-Zusammensetzungen bekannt, die einen feinteiligen Polyharnstofffüllstoff enthalten. Die dabei verwendeten Polyharnstofffüllstoffpartikel weisen eine lichtmikroskopisch bestimmte Teilchengröße von 0,001 bis 500 µm auf. Die Polyharnstoffpartikel werden jedoch nicht isoliert sondern bevorzugt in Gegenwart des Kautschuks hergestellt. Ein getrocknetes feinteiliges Polyharnstoffpulver, ein Verfahren zu seiner Herstellung sowie dessen Anwendung als Verdicker in sogenannten PU-Fetten wird jedoch nicht erwähnt.

US-A-4489017 offenbart ein Verfahren zum Sprühtrocknen von Suspensionen, bestehend aus Mikrokapseln, welche Polyharnstoffwände aufweisen und einen Kern aus einem wasserlöslichen Silikat und/oder einem wasserlöslichen Erdalkalimetallsalz oder -hydroxid. Das Herstellungsverfahren wird in wässriger Lösung durchgeführt.

EP-A-0501348 offenbart ein Verfahren, bei dem Polyvinylalkohol in wässriger Phase mit einer organischen Phase gemischt wird, die ein Polycaprolacton-Polyester-Diol enthält. Anschließend wird eine Dispersion hergestellt, zu der dann Ethylendiamin gegeben wird. Nach der anschließend stattfindenden Grenzflächen-Polymerisation erfolgt die Sprühtrocknung.

Den vorliegenden Erfindern gelang es völlig überraschend besonders feinteilige Polyharnstoffpulver durch die Verwendung eines Sprühtrocknungsverfahrens herzustellen. Durch die Verwendung der feinteiligeren Partikel ist insbesondere bei der Einarbeitung in Basisöle zur Herstellung sogenannter PU-Fette die Anwendung niedrigerer Drücke < 500 bar bei der Homogenisierung möglich, was zu Energie- und Material-Einsparungen führt. Neben dem Vorteil des geringeren Aufwand bei der Einarbeitung der Polyharnstoffpulver in die Basisöle mittels Homogenisierung (insbesondere Energieaufwand) fanden die Erfinder überraschend auch Vorteile bei den Eigenschaften der mit den erfindungsgemäß hergestellten Polyharnstoff-Pulvern hergestellten PU-Fette. So erfordert die Verwendung feinteiligerer Polyharnstoffe eine verringerte Beladung, um gleiche Viskositäten zu erhalten, verglichen mit grobkörnigerem Material. Weiterhin ist die Konsistenz der mit den erfindungsgemäß hergestellten Polyharnstoff-Pulvern hergestellten und gewalkten PU-Fette gegenüber dem Stand der Technik verbessert. Hierunter ist zu verstehen, dass die Änderung der Fettkonsistenz nach 60 Walkhüben (Pw,60) bzw. 60,000 Walkhüben (Pw,60,000) - bestimmt mittels Konuspenetrationsmessung nach ISO 2137 - geringer ausfällt als bei Fetten, die nach dem Stand der Technik hergestellt wurden.

Die vorliegende Erfindung betrifft somit ein Verfahren zur Herstellung eines (Poly)harnstoffpulvers, worin eine Suspension von (Poly)harnstoffpartikeln in mindestens einem organischen Lösungsmittel der Sprühtrocknung unterworfen wird wobei die (Poly)harnstoffpartikel aus der Umsetzung mindestens eines (Poly)isocyanates, mindestens eines (Poly)amins und gegebenenfalls mindestens eines Monoamins resultieren. (Poly)harnstoffe sollen erfindungsgemäß Monoharnstoff-Verbindungen und Polyharnstoff-Verbindungen einschließen. Monoharnstoff-Verbindungen sind solche, die eine Gruppe 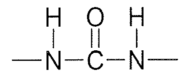 im Molekül aufweisen, wobei die freien Valenzen durch mindestens eine organische Gruppe abgesättigt sind, Harnstoff selbst also ausgenommen ist. Erfindungsgemäß bevorzugt sind jedoch die Polyharnstoff-Verbindungen, die mindestens zwei Gruppen 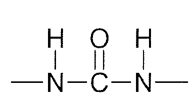 im Molekül aufweisen.

Bevorzugt beträgt in der eingesetzten Suspension das Gewichtsverhältnis der (Poly)harnstoffpartikel zum Gesamtgewicht der eingesetzten organischen Lösungsmittel von 10% bis 80% . Besonders bevorzugt beträgt das Verhältnis von 15% bis 35%. Ein Verhältnis von größer als 80% ist nachteilig, weil die Eindickung der Suspension während der Reaktion die Diffusion und Umsetzung der Reaktionspartner zunehmend behindert. Ein Verhältnis von kleiner als 10% ist nachteilig, weil die Ausbeute unwirtschaftlich ist.

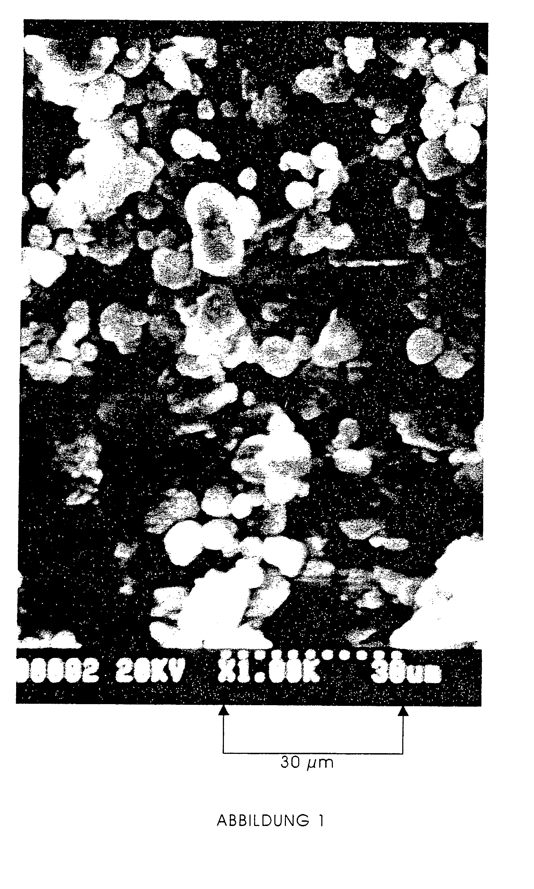

Die mittlere Partikelgröße der (Poly)harnstoffpartikel in der in der Sprühtrocknung eingesetzten Suspension wird zweckmäßig ausgewählt. Sie beträgt bevorzugt weniger als 50 µm, bevorzugt weniger als 40 µm. Die Begriff der "mittleren Partikelgröße", wie er in der vorliegenden Patentanmeldung verwendet wird, meint das Gewichtsmittel der Partikelgröße und wird durch kohärente Lichtstreuung (Laserbeugungsmethode) bestimmt. Dieser Wert schließt die Größe von separaten Primärpartikeln und Agglomeraten daraus ein. Wie beispielsweise Abbildung 1 zeigt, liegt die mittlere Partikelgröße der Primärpartikel im allgemeinen deutlich niedriger bei etwa 1 bis 1 0 µm.

Die mittlere Partikelgröße der Polyharnstoffpartikel in der in der Sprühtrocknung eingesetzten Suspension kann bei der Herstellung des Polyharnstoffs beispielsweise durch Zugabe von Emulgatoren und Dispergiermittel vor oder während des Herstellungspozesses des Polyharnstoffs gesteuert werden. Geeignete Emulgatoren und Dispergiermittel sind anionische, kationische oder nichtionische, wie beispielsweise Dodecylbenzolsulfonsäure-Na-Salz, Dioctylsulfosuccinat, Naphthalinsulfonsäure-Na-Salz, Triethylbenzylammoniumchlorid oder Polyethylenoxidether, wie Umsetzungsprodukte von Nonylphenol mit 3 bis 50 Mol Ethylenoxid pro Mol Nonylphenol. Die Mengen an Emulgatoren oder Dispergiermittel betragen ca. 0,1 bis 5 Gew.-%, bezogen auf Gesamtmenge an Polyharnstoff, die hergestellt wird.

Das Lösungsmittel, dass in der erfindungsgemäß eingesetzten Suspension verwendet wird, wird aus organischen Lösungsmitteln ausgewählt. Der Begriff Lösungsmittel meint erfindungsgemäß insbesondere ein Dispergiermittel, insbesondere ein bei Raumtemperatur (20°C) flüssiges Dispergiermittel. Besonders bevorzugt wird das Lösungsmittel ausGruppe ausgewählt, die besteht: aus gegebenenfalls substituierten geradkettigen, verzweigten, cyclischen aliphatischen oder aromatischen Kohlenwasserstoffen. Substituenten können insbesondere Sauerstoff- und/oder Halogenhaltige funktionelle Gruppen sein, wie Chlor, eine Carbonylgruppe, eine Estergruppe, eine Ethergruppe etc. Beispiele des Lösungsmittels schließen ein: Butan, Pentan, n-Hexan, Cyclohexan, n-Octan, Isooctan, Benzol, Toluol, Xylol, halogenierten Kohlenwasserstoffen, wie Methylenchlorid, Chlorbenzol, Ether, wie Diethylether, Tetrahydrofuran, Petrolether, Ketonen, wie Aceton, Ester wie Ethylacetat, Butylacetat etc.

Besonders bevorzugte Lösungsmittel sind n-Hexan, n-Heptan, Petrolether und Ethylacetat.

Für Lebensmittelanwendungen besonders bevorzugte Lösemittel sind die im US Gesetz "Code of Federal Regulations" CFR 21 §§ 170 - 199 dargelegten Lösemittel, wie z.B. isoparaffinische Petrolether gemäß § 173.280, Hexan gemäß § 1 73.270, Aceton gemäß § 173.210, Ethylacetat gemäß § 1 73,228, 1 ,3-Butylglykol gemäß § 172.712.

Bei dem Lösungsmittel der eingesetzten Suspension handelt es sich um das Lösungsmittel, das während der Herstellung des Polyharnstoffs, wie unten beschrieben, verwendet wird. Es ist aber beispielsweise auch möglich nach der Herstellung des Polyharnstoffs weitere Lösungsmittel zuzusetzen, um eine geeignete Konzentration der Suspension für die Sprühtrocknung zu erzielen.

Es ist auch möglich, Mischungen eines oder mehrerer Lösungsmittel für die erfindungsgemäß verwendete Suspension zu verwenden.

Die erfindungsgemäß verwendete Suspension der Polyharnstoffpartikel wird zweckmäßig erhalten durch Herstellung von Polyharnstoff in einem geeigneten organischen Lösungsmittel aus dem der gebildete Polyharnstoff in einer geeigneten Partikelgröße ausfällt, sodass die erhaltenen Suspension direkt in die Sprühtrocknung eingesetzt werden kann.

Die Herstellung der erfindungsgemäß in die Sprühtrocknung eingesetzten Polyharnstoffpartikel-Lösungsmittelsuspension kann in an sich bekannter Weise durch die Umsetzung mindestens eines Polyisocyanates, mindestens eines Polyamins sowie gegebenenfalls mindestens eines Monoamins in einem geeigneten organischen Lösungsmittel erfolgen. Die Herstellung der Mono-Harnstoffverbindungen erfolgt entsprechend durch Umsetzung monofunktioneller Isocyanat-Verbindungen mit monofunktionellen Aminen.

Die Herstellung der Polyharnstoffe erfolgt zweckmäßig durch Umsetzung mindestens eines Polyisocyanats mit mindestens einem Mono- bzw. Polyamin bei Temperaturen von -100 bis 250°C, bevorzugt 20 bis 80°C, in einem organischen Lösungsmittel unter Ausfällung des Polyharnstoffs.

Die Polyharnstoffe werden durch Reaktion von Polyisocyanaten mit Mono- bzw. Polyaminen hergestellt und besitzen beispielsweise die oben genannten Teilchengrößen sowie Schmelz- bzw. Zersetzungspunkte von ≥180°C, bevorzugt ≥ 200°C, besonders bevorzugt ≥ 240°C. Ihre Glastemperaturen liegen, sofern vorhanden, oberhalb von 50°C, bevorzugt oberhalb von 100°C.

Geeignete Polyisocyanate zur Herstellung der Polyharnstoffe sind z.B. Hexamethylendiisocyanat (HDI), Toluoldiisocyanat (TDI), 2,2'-, 2,4'- und 4.4'-Diisocyanatodiphenylmethan (MDI), Polymethylenpolyphenylisocyanat (PMDI), Naphthalindiisocyanat (NDI), 1,6-Diisocyanato-2,2,4-trimethylhexan, Isophorondiisocyanat (3-(Isocyanato-methyl)-3,5,5-trimethylcyclohexylisocyanat, IPDI), Tris(4-isocyanato-phenyl)-methan, Phosphorsäure-tris-(4-isocyanatophenylester), Thiophosphorsäure-tris-(4-isocyanato-phenylester) sowie Oligomerisierungsprodukte, die durch Reaktion der genannten niedermolekularen Diisocyanate mit Diolen oder Polyalkoholen, insbesondere Ethylenglykol, 1 ,4-Butandiol, 1,6-Hexandiol, Trimethylolpropan, Pentaerythrit erhalten wurden und einen Restgehalt an freien Isocyanatgruppen besitzen. Ferner Oligomerisierungsprodukte, die durch Reaktion der genannten niedermolekularen Diisocyanate mit hydroxygruppenhaltigen Polyestern, wie z.B. Polyestern auf Basis Adipinsäure und Butandiol und Hexandiol mit Molgewichten von 400 bis 3.000, oder durch Reaktion mit hydroxygruppenhaltigen Polyethern, wie Polyethylengykolen, Polypropylenglykolen, Polytetrahydrofuranen mit Molgewichten von 150 bis 3.000, erhalten wurden und einen Restgehalt an freien Isocyanatgruppen besitzen können, ferner Oligomerisierungsprodukte, die durch Reaktion der genannten niedermolekularen Diisocyanate mit Wasser oder durch Dimerisierung oder Trimerisierung, wie z.B. dimerisiertes Toluoldiisocyanat (Desmodur TT) und trimerisiertes Toluoldiisocyanat, Isocyanatgruppen-haltige aliphatische Polyuretdione, z.B. auf Isophorondiisocyanotbasis erhalten wurden und einen Restgehalt an freien Isocyanatgruppen besitzen. Bevorzugte Gehalte an freien Isocyanatgruppen der Polyisoyanate liegen bei 2,5 bis 50 Gew.-%, bevorzugt 10 bis 50 Gew.-%, besonders bevorzugt bei 15 bis 50 Gew.-%. Derartige Polyisocyanate sind bekannt und im Handel erhältlich. Siehe hierzu Houben-Weyl, Methoden der Organischen Chemie, Band XIV, Seiten 56-98, Georg Thieme Verlag Stuttgart 1963, Encyclopedia of Chem, Technol., John Wiley 1984, Vol 13, Seiten 789-818, Ullmann's Encyclopedia of Industrial chemistry, VCH, Weinheim, 1989, Vol, A 14, Seiten 61 1-625, sowie die Handelsprodukte der Desmodur- und Crelan-Reihe (Bayer AG).

Geeignete Polyisocyanate sind auch blockierte Polyisocyanate, die unter den genannten Reaktionsbedingungen mit den Polyaminen reagieren können. Hierunter fallen alle bereits genannten Polyisocyanate, wobei die Isocyanatgruppen jeweils mit geeigneten Abspaltungsgruppen blockiert sind, die bei höherer Temperatur wieder abspalten und die Isocyanatgruppen freisetzen. Geeignete Abspaltungsgruppen sind insbesondere Caprolactam, Malonsäureester, Phenol und Alkylphenole, wie z.B. Nonylphenol sowie Imidazol und Natriumhydrogensulfit. Besonders bevorzugt sind Caprolactam-, Malonester und Alkylphenol-blockierte Polyisocyanate, insbesondere auf Basis Toluoldiisocyanat oder trimerisiertem Toluoldiisocyanat. Bevorzugte Gehalte an blockierten Isocyanatgruppen liegen bei 2,5 bis 30 %. Derartige blockierte Polyisocyanate sind bekannt und im Handel erhältlich. Siehe hierzu Houben-Weyl, Methoden der Organischen Chemie, Band XIV, Seiten 56-98, Georg Thieme Verlag Stuttgart 1963, sowie die Handelsprodukte der Desmodur-und Crelan-Reihe (Bayer AG).

Bevorzugte Polyisocyanate sind Hexamethylendiisocyanat (HDI), Toluoldiisocyanat (TDI), 2,4'- und 4,4'-Diisocyanatodiphenylmethan (MDI), Polymethylenpolyphenylisocyanat (PMDI), 1,6-Diisocyanato-2,2,4-trimethylhexan, Isophorondiisocyanat (PDI), und Oligomerisierungsprodukte, die durch Reaktion der genannten niedermolekularen Diisocyanate mit Wasser oder mit Diolen oder Polyalkoholen, insbesondere Ethylenglykol, 1 ,4-Butandiol, 1,6-Hexandiol, Trimethylolpropan sowie Penterythrit, erhalten wurden und einen Restgehalt an freien Isocyanatgruppen besitzen, sowie Oligomerisierungsprodukte, die durch Dimerisierung oder Trimerisierung, wie dimerisiertes Toluoldiisocyanat (Desmodur TT) und trimerisiertes Toluoldiisocyanat, Isocyanatgruppen-haltige aliphatische Polyuretdione, z.B. auf Isophorondlisocyanatbasis, erhalten wurden und einen Gehalt an freien Isocyanatgruppen von 2,5 bis 50 Gew.-%, bevorzugt 10 bis 50 Gew.-%, besonders bevorzugt 15 bis 50 Gew.-%, besitzen. Ganz besonders bevorzugt werden 2,4'-und 4.4'-Diisocyanatodiphenylmethan (MDI) Hexamethylendiisocyanat (HDI), Toluoldiisocyanat (TDI) und Polyrnethylenpolyphenylisocyanat (PMDI).

Geeignete Polyamine sind aliphatische Di- und Polyamine, wie Hydrazin, Ethylendiamin, 1,2-Propylendiamin, 1,3-Propylendiamin, 1-Amino-3-methylaminopropan, 1,4-Diaminobutan, N,N'-dimeth-1-ethylendiamin, 1,6-Diaminohexan, 1,12-Diaminododecan, 2,5-Diamino-2,5-dimethylhexan, Trimethyl-1,6-hexan-diamin, Diethylentriamin, N,N',N"-Trimethyldiethylentriamin, Triethylentetramin, Tetraethylenpentamin,Pentaethylenhexamin, Polyethylenimin mit Molgewichten zwischen 250 und 10000, Dipropylentriamin, Tripropylentetramin, Bis-(3-aminopropyl)amin, Bis-(3-aminopropyl)-methylamin, Piperazin, 1 ,4-Diaminocyclohexan, Isophorondiamin, N-Cyclohexyl- 1,3-propandiamin, Bis-(4-amino-cyclohexyl)methan, Bis-(4-amino-3-methyl-cyclohexyl)-methan Bisaminomethyltricyclodecan (TCD-Diamin), o-, m- und p-Phenylendiamin, 1,2-Diamino-3-methylbenzol, 1 ,3-Diamino-4-methylbenzol (2,4-Diaminotoluol), 1,3-Bisominomethyl-4,6-dimethylbenzol, 2,4- und 2,6-Diamino-3,5-diethyltoluol, 1,4- und 1,6-Diaminonaphthalin, 1,8- und 2,7 Diaminonaphthalin, Bis-(4-amino-phenyl)-methan, Polymethylenpolyphenylamin, 2,2-Bis-(4-aminophenyl)-propan, 4,4'-Oxibisanilin, 1 ,4-Butandiol-bis-(3-aminopropylether), hydroxylgruppenhaltige Polyamine, wie 2-(2-Aminoethylamino)ethanol, carboxylgruppenhaltige Polyamine, wie 2,6-Diamino-hexansäure. Ferner aminogruppenhaltige flüssige Polybutadiene oder Acrylnitril/Butadien-Copolymere mit mittleren Molgewichten bevorzugt zwischen 500 und 10.000 und aminogruppenhaltige Polyether z.B. auf Basis von Polyethylenoxid, Polypropylenoxid oder Polytetrahydrofuran mit einem Gehalt an primären oder sekundären Aminogruppen von 0,25 bis ca. 8 mmol/g, bevorzugt 1 bis 8 mmol/g. Derartige aminogruppenhaltige Polyether sind im Handel erhältlich (z.B Jeffamin D-400, D-2000, DU-700, ED-600, T-403 und T-3000 der Texaco Chem. Co.).

Besonders bevorzugte Polyamine sind Hydrazin, Ethylendiamin, 1,2-Propylendiamin, 1 ,3-Propylendiamin, 1-Amino-3-methylaminopropan, 1,4-Diaminobutan, N,N'-Dimethyl-ethylendiamin, 1,6-Diaminohexan, Diethylentriamin, N,N',N"-Trimethyldiethylentriamin, Triethylentetramin, Tetraethylenpentamin, Pentaethylenhexamin, Polyethylenimin mit Molgewichten zwischen 250 und 10,000, Dipropylentriamin, Tripropylentetramin, Isophorondiamin, 2,4-Diaminotoluol und 2,6-Diaminotoluol, Bis-(4-amino-phenyl)-methan, Polymethylen-polyphenylamin sowie aminogruppenhaltige flüssige Polybutadiene oder Acrylnitril/Butadien-Copolymere mit mittleren Molgewichten bevorzugt zwischen 500 und 10,000, aminogruppenhaltige Polyether z.B. auf Basis von Polyethylenoxid, Polypropylenoxid mit einem Gehalt an primären oder sekundären Aminogruppen von 1 bis 8 mmol/g.

Ganz besonders bevorzugte Polyamine sind Ethylendiamin, 1,2-Propylendiamin, 1 ,3-Propylendiamin, Diethylentriamin, Triethylentetramin, Tetraethylenpentamin, Pentaethylenhexamin, Polyethylenimin mit Molgewichten zwischen 250 und 10.000, 1,6-Diaminohexan, 2,4- Diaminotoluol und 2,6-Diaminotoluol, Bis-(4-amino-phenyl)-methan sowie Polymethylenpolyphenylamin sowie aminogruppenhaltige Polyether, z.B. auf Basis von Polyethylenoxid, Polypropylenoxid, mit einem Gehalt an primären oder sekundären Aminogruppen von 1 bis 8 mmol/g und Molgewichten zwischen 250 und 2000.

Zusätzlich zu den Polyaminen können noch weitere gegenüber den Polyisocyanaten reaktive Verbindungen zugesetzt werden, insbesondere Kettenabbruchsmittel, wie Monoamine, wie Ammoniak, C1 bis C18-Alkylamine und Di-(C1 bis C18-Alkyl)-amine, sowie Arylamine, wie Anilin, C1-C12-Alkylarylamine, und aliphatische, cycloaliphatische oder aromatische Mono-, Di- oder Poly-C1- bis C18-Alkohole, aliphatische, cycloaliphatische oder aromatische Mono-, Di- oder C1 bis C18-Carbonsäuren, Aminosilane, wie 3-Aminopropyltrimethoxysilan und 3-Aminopropyltriethoxysilan, sowie carboxyl-, epoxy- oder hydroxyl-gruppenhaltige flüssige Polybutadiene oder Acrylnitril/Butadien-Copolymere mit mittleren Molgewichten bevorzugt zwischen 500 und 10.000 und Polyether und Polyester mit Molgewichten zwischen 200 bis 10.000, die gegenüber den Polyisocyanaten reaktive Hydroxyl- und/oder Carboxylgruppen besitzen, eingesetzt werden. Beispiel für diese zusätzlich zu verwendenden Monomamine sind Ammoniak, Methylamin, Dimethylamin, Dodecylamin, Octadecylamin, Oleylamin, Stearylamin, Ethanolamin, Diethanolamin, beta-Alanin oder Aminocapronsäure. Die Menge dieser zusätzlichen Amine, Alkohole, Carbonsäuren, hydroxyl- und/oder corboxylgruppenhaltiger Polyether und Polyester hängt von deren Gehalt an gegenüber den Polyisocyanaten reaktiven Gruppen ab und liegt bei 0 bis 0,5 mol reaktive Gruppe pro Isocyanat-Äquivalent.

Die erfindungsgemäßen Polyharnstoffpartikel können - wie erwähnt - durch Umsetzung von mindestens einem Polyisocyanat mit mindestens Polyamin sowie gegebenenfalls mindestens einem Monoamin bei Temperaturen von -100 bis 250°C, bevorzugt 20 bis 80°C, in einem organischen Lösungsmittel unter Ausfällung des Polyharnstoffs hergestellt werden. Die Lösungsmittel sind organische, vorzugsweise aprotische mit Isocyanaten nicht reaktive, Lösungsmittel, insbesondere gegebenenfalls substituierte geradkettige, verzweigte, cyclische aliphatische oder aromatische Kohlenwasserstoffe, wie Butan, Pentan, n-Hexan, Petrolether, Cyclohexan, n-Octan, Isooctan, Benzol, Toluol, Xylol, halogenierte Kohlenwasserstoffen, wie Methylenchlorid, Chlorbenzol, Ether, wie Diethylether, Tetrahydrofuran, Ketone, wie Aceton, Ester wie Ethylacetat, Butylacetat etc.

Besonders bevorzugte Lösungsmittel sind n-Hexan, n-Heptan, Petrolether, Ethylacetat, Für Lebensmittelanwendungen besonders bevorzugte Lösemittel sind, wie oben bereits erwähnt: isoparaffinische Petrolether, Hexan, Aceton, Ethylacetat und 1,3-Butylglykol,

Im Gegensatz zum oben beschriebenen sogenannten "in-situ"-Stand der Technik erfolgt die Herstellung der Polyharnstoffpartikel erfindungsgemäß nicht in dem sogenannten Grund- oder Basisöl des Schmiermittels, wie es unten beschrieben ist. Die Lösungsmittel die zur Herstellung der Polyharnstoffe verwendet werden und die im allgemeinen in den der Sprühtrocknung unterworfenen Suspensionen vorliegen, unterscheiden sich von den sogenannten Basisölen insbesondere durch ihre Viskosität und ihr Molekulargewicht. Die Viskosität der Lösungsmittel liegt bei etwa bis zu 1 cSt (40 °C), während sie bei den Basisölen mindestens bei etwa 4, meist etwa 5 cSt (40 °C) liegt. Basisöle weisen im allgemeinen, herstellungsbedingt durch beispielsweise Raffination/Destillation eine Molekulargewichtsverteilung auf. Lösemittel besitzen demgegenüber ein definiertes Molekulargewicht.

Die Umsetzung von Polyisocyanat mit Polyamin und gegebenenfalls Monoamin wird bevorzugt so durchgeführt, dass man das Polyisocyanat in dem Lösungsmittel vorlegt und anschließend Mono- bzw. Polyamin hinzumischt, oder indem man das Mono- bzw. Polyamin in dem Lösungsmittel vorlegt und das Polyisocyanat hinzumischt. Die Mengen an Polyisocyanat, Mono- bzw. Polyamin richten sich nach den gewünschten Eigenschaften der Polyharnstoffpartikel. Durch Einsatz eines Überschusses an Polyamin enthalten diese beispielsweise noch gebundene Aminogruppen, oder bei Einsatz eines Überschusses von Polyisocyanat noch gebundene Isocyanatgruppen enthält.

Bevorzugte Mengen-Verhältnisse von Polyisocyanat und Polyamin liegen bei 0,5 bis 2,0, bevorzugter bei 0,7 bis 1,3, insbesondere 0,8 bis 1,2 Mol Isocyanatgruppe pro Mol Aminogruppe.

Werden Monoamine, wie Stearylamin als Kettenstopper verwendet, kann dies die Verhältnisse von Polyamin zu Polyisocyanat entsprechend beeinflussen.

Neben Mono- bzw. Polyaminen können erfindungsgemäß weitere gegenüber Isocyanaten reaktive polyfunktionelle Verbindungen verwendet werden, wie zum Beispiel insbesondere Polyole, sodass es zur Bildung von Polyharnstoffurethanen kommt. Solche Polyole können auch Polyethergruppen aufweisen. Bei den Polyolen kann es sich beispielsweise um die oben erwähnten zur Herstellung von oligomeren Polyisoyanaten eingesetzten Polylalkohole handeln.

Zur Steuerung der Polyharnstoff-Teilchengröße können wie oben bereits erwähnt, vor oder während des Herstellungsprozesses Emulgatoren und Dispergiermittel zugegeben werden.

Erfindungsgemäß handelt es sich bei den Polyharnstoffen um solche, die mindestens zwei Harnstoffwiederholungseinheiten der Formel 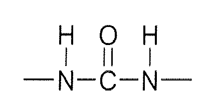 aufweisen. Besonders bevorzugt sind erfindungsgemäß Polyharnstoffe, die im Mittel zwei, drei oder vier solcher Harnstoffgruppen aufweisen.

Bevorzugt bestehen die Polyharnstoffpartikel aus Polyharnstoff mit einer massenmittleren Molekülmasse bestimmt durch Gelpermeationschromatographie gegen Polystyrol als Standard, von 500 bis 20.000.

Besonders bevorzugte Polyharnstoffe sind Umsetzungsprodukte aus 2,4'- und 4,4'-Diisocyanatodiphenylmethan (MDI), Hexamethylendiisocyanat (HDI) und Toluoldiisocyanat (TDI) und Polymethylenpolyphenylisocyanat (PMDI) mit Ethylendiamin, 1,2-Propylendiamin, 1,3-Propylendiamin, 2,4- 1,6-Diaminohexan, Diaminotoluol und 2,6-Diaminotoluol, Bis-(4-amino-phenyl)-methan sowie Polymethylenpolyphenylamin und gegebenenfalls Monoaminen, wie Ammoniak, C1 bis C18-Alkylamine und Di-(C1 bis C18-Alkyl)-amine, sowie Arylamine, wie Anilin, C1-C12-Alkylarylamine mit Molgewichten von 500 bis 3000.

Durch die Umsetzung der Polyisocyanate mit den Mono- bzw. Polyaminen und gegebenenfalls weiteren Reaktanten, wie monofunktionellen Kettabbruchsmitteln, weiteren polyfunktionellen gegenüber Isocyanatgruppen reaktiven Verbindungen wie Polyolen in den oben beschriebenen Lösungsmitteln fallen die erfindungsgemäß eingesetzten Suspensionen gegebenenfalls nach vorherigem Abkühlen oder Zusatz weiteren Lösungsmittels an und werden bevorzugt unmittelbar, d.h. ohne Aufarbeitung, in die Sprühtrocknung gegeben.

Die Monoharnstoff-Verbindungen werden entsprechend den Polyharnstoff-Verbindungen insbesondere durch Umsetzung monofunktioneller Isocyanate mit monofunktionellen Aminen hergestellt, Es handelt sich dabei zweckmäßig um solche Verbindungen, die eine verdickende Wirkung auf die Basisöle ähnlich den Polyharnstoffen aufweisen.

Die Spühtrocknung wird zweckmäßig bei einer Temperatur im Bereich von 80°C bis 140°C durchgeführt. Die Temperatur meint dabei die Temperatur des Trägergases an der Trägergaszuführung.

Die Sprühtrocknung wird bevorzugt in einem Sprühtrockner mit Düsenzerstäubung, durchgeführt. Der Zerstäubungsdruck beträgt zweckmäßig 2 bis 5, bevorzugt 3 bis 4 bar.

Die nach dem erfindungsgemäßen Verfahren nach der Sprühtrocknung erhaltenen trockenen Polyharnstoffpulver weisen bevorzugt eine mittlere Partikelgröße von weniger als 50 µm, bevorzugt weniger als 40 µm und noch bevorzugter von weniger als 30 µm auf (jeweils bestimmt durch Laserbeugung, wie oben erläutert. Die untere Grenze der Korngröße liegt bevorzugt bei mehr als etwa 1 µm, bevorzugter bei mehr als 5 µm.

Die mittlere Korngröße meint erfindungsgemäß das Gewichtsmittel der Korngröße, und sie wird bestimmt durch kohärente Lichtstreuung (Laserbeugungsmethode).

Die nach dem erfindungsgemäßen Verfahren nach der Sprühtrocknung erhaltenen getrockneten (Poly)harnstoffpulver weisen bevorzugt einen Restgehalt an Lösungsmittel von weniger als 1 Gew.-%, bevorzugter von weniger als 0,5 Gew.-% und noch bevorzugter von weniger als 0,3 Gew.-% auf.

Die vorliegende Erfindung betrifft weiterhin (Poly)harnstoffpulver, die durch das erfindungsgemäße Verfahren erhältlich sind und insbesondere auch die getrockneten (Poly)harnstoffpulver, die eine mittleren Partikelgröße von weniger als 50 µm, bevorzugter weniger als 40 µm und noch bevorzugter weniger als 30 µm aufweisen. Der verbleibende Lösungsmittelrestgehalt in dem (Poly)harnstoffpulver ist bevorzugt weniger als 1 Gew.-%, bevorzugter weniger als 0,5 Gew.-%, noch bevorzugter weniger als 0,3 Gew.-% und noch bevorzugter weniger als 0,2 Gew.-%, Nirgendwo im Stand der Technik sind trockene (Poly)harnstoffpulver mit derart geringer Partikelgröße beschrieben worden. Wie oben erwähnt, wurde mit den erfindungsgemäßen (Poly)harnstoffpulvern erstmals eine Möglichkeit gefunden, Abnehmern die Herstellung von sogenannten PU-Fetten zu ermöglichen, ohne dass diese von dem unter dem Gesichtspunkt der Arbeitssicherheit problematischen "in-situ"-Verfahren Gebrauch machen müssen oder dass diese eine Hochdruckhomogenisierung bei hohen Drücken von mehr als 500 bar verwenden müssen. Es ist daher zu erwarten, dass die nach dem erfindungsgemäßen Verfahren erhältlichen Polyharnstoffpartikel Anwendungsgebiete bzw. Abnehmerkreise erschließen, für die man die Anwendung von Polyharnstoffen aufgrund der beschriebenen Nachteile bislang nicht in Erwägung zog.

Die nach dem erfindungsgemäßen Verfahren erhältlichen (Poly)harnstoffpulver weisen überraschend auch eine sehr hohe spezifischen Oberfläche von bevorzugt mehr als 20 m²/g, bevorzugter mehr als 30 m²/g und noch bevorzugter von mehr als 40 m²/g bis zu etwa 80 m²/g (jeweils gemessen durch Hg-Porosimetrie) auf. Solche hohen spezifischen Oberflächen sind durch andere im Stand der Technik üblichen Herstellungsverfahren und anschließendes Vermahlen nicht erhältlich.

Die vorliegende Erfindung betrifft weiterhin eine Zusammensetzung, die die vorstehend beschriebenen (Poly)hornstoffpulver suspendiert in mindestens einem Basisöl und/oder Lösungsmittel enthält.

Basisöle schließen dabei im Prinzip jede, vorzugsweise organische Flüssigkeit ein, die gegenüber dem (Poly)harnstoffpulver inert ist. Besonders handelt es sich um solche Flüssigkeiten, die sich mittels der (Poly)harnstoffpulver verdicken lassen,

Bevorzugte Basisöle sind beispielsweise übliche in Schmiermitteln eingesetzte Basisöle, wie übliche verwendete Mineralöle, synthetische Kohlenwasserstofföle oder synthetische und natürliche Esteröle, oder Mischungen davon. Im allgemeinen weisen diese eine Viskosität im Bereich von etwa 4, bevorzugt etwa 5 bis etwa 400 cSt bei 40°C auf, obwohl typische Anwendungen eine Viskosität im Bereich von etwa 10 bis ungefähr 200 cSt bei 40°C verlangen. Mineralöle, die erfindungsgemäß eingesetzt werden können, können konventionelle raffinierte Grundöle sein, die sich von paraffinischen, naphthenischen oder gemischten Rohölen ableiten. Synthetische Basisöle schließen Esteröle ein, wie Esters von Glycolen wie ein C13 Oxosäurediester von Tetraethylenglycol, oder komplexe Ester wie solche die aus 1 mol Sebacinsäure und 2 mol Tetraethylenglycol und 2 mol of 2-Ethylhexansäure gebildet werden. Natürliche Esteröle schließen gesättigte und ungesättigte natürliche Esteröle, wie pflanzliche oder tierische Öle und Fette, bei denen es sich um die bekannten Triglyceride natürlich vorkommender Fettsäuren handelt, sowie deren hydrierte Produkte oder Umesterungsprodukte ein. Bevorzugte derartige natürliche Esteröle sind pflanzlicher Herkunft, insbesondere pflanzliche Öle, die im wesentlichen aus gemischten Glycerinestern höherer Fettsäuren mit gerader Anzahl von Kohlenstoffatomen bestehen, wie zum Beispiel Aprikosenkernöl, Avocadoöl, Baumwollöl, Borretschöl, Distelöl, Erdnussöl, gehärtetes Erdnussöl, Getreidekeimöl, Hanföl, Haselnussöl, Kürbiskernöl, Kokosöl, Leinsamenöl, Lorbeeröl, Mohnöl, Macadamiaöl, Maisöl, Mandelöl, Nachtkerzenöl, Olivenöl, hydriertes Palmöl, Palmöl, Pistazienkernöl, Rapsöl, Rizinusöl, Sanddornöl, Sesamöl, Sojaöl, Sonnenblumenkernöl, Traubenkernöl, Wallnussöl, Weizenkeimöl, Wildrosenöl, Kokosfett, Palmfett, Palmkernfett oder Rüböl, Bevorzugt sind Sonnenblumenöl, Sojaöl und Rapsöl. Andere synthetische Öle schließen ein: Synthetische Kohlenwasserstoffe wie Poly-alpha-olefine, Alkylbenzole, wie z.B Alkylatsümpfe aus der Alkylierung von Benzol mit Tetrapropylen, oder die Copolymere von Ethylen und Propylen; Siliconöle, z.B. Ethylphenylpolysiloxane, Methylpolysiloxane, etc., Polyglycolöle, z.B. solche erhalten durch Kondensation von Butylalkohol mit Propylenoxid; Kohlensäureester, z.B. das Produkt der Umsetzung von C8 Oxoalkoholen with Ethylcarbonat unter Bildung eines Holbesters, gefolgt von der Reaktion mit Tetraethyleneglycol, etc. Andere geeignete synthetische Öle schließen Polyphenylether ein, wie diejenigen, die ungefähr 3 bis 7 Etherbindungen und ungefähr 4 bis 8 Phenylgruppen aufweisen. Weitere Basisöle schließen perfluorierte Polyalkylether ein, wie diejenigen, die in der WO 97/477710 beschrieben sind.

Die Basisöle weisen bevorzugt einen Siedepunkt von mehr als 100 °C, bevorzugter mehr als 150°C, noch bevorzugter mehr als 180 °C auf.

Bevorzugte Basisöle sind konventionelle raffinierte Mineralöle, die sich von paraffinischen, naphthenischen oder gemischten Rohölen ableiten, synthetische Basisöle, wie z.B. Poly-alpha-olefine, Alkylbenzole, Esteröle etc.

Für Lebensmittelanwendungen besonders bevorzugte Basisöle sind die im US Gesetz "Code of Federal Regulations" CFR 21 §§ 170 - 199 dargelegten Basisöle, wie z.B. Weißöl gemäß § 172.878, isoparaffinische Kohlenwasserstoffe gemäß § 178.3530, Mineralöl gemäß § 178.3620, Polyethylenglykole gemäß § 178.3750, FettsäureMethyl-/Ethylester gemäß § 172.225.

Auch die nachträgliche erneute Suspendierung der erfindungsgemäß erhältlichen Polyharnstoffpartikel ist erfindungsgemäß möglich. Solche Suspensionen, deren (Poly)harnstoffpartikel die erfindungsgemäßen Eigenschaften besitzen, können beispielsweise zur Einarbeitung in Lacke, Anstrichmittel, Spachtelmassen etc. dienen.

Bevorzugt enthält die erfindungsgemäße Zusammensetzung von 2 bis 25 Gew.-%, bevorzugt von 5 bis 15 Gew.-% des erfindungsgemäßen (Poly)harnstoffs bezogen auf die Gesamtmenge des Basisöls bzw. des Lösungsmittels,

Die vorliegende Erfindung betrifft weiterhin ein Verfahren zur Herstellung der oben beschriebenen Zusammensetzung welches das Suspendieren des erfindungsgemäßen (Poly)harnstoffpulvers in mindestens einem Basisöl umfasst, Das Suspendieren des (Poly)harnstoffpulvers in dem Basisöl oder einem Lösungsmittel kann in an sich bekannter Weise erfolgen, beispielsweise in einem Homogenisator, mittels Walzenstuhl oder Hochgeschwindigkeits-Dissolvern sowie weiteren für die Herstellung von solchen Dispersionen an sich bekannten Vorrichtungen, wie zum Beispiel Korundscheiben, Kolloidmühlen, Stiftmühlen etc.. Die Einarbeitung des Pulvers erfolgt zweckmäßig durch Anteigen bei erhöhten Temperaturen von ca. 100 bis 220°C, bevorzugt von ca. 120 bis 200°C, und anschließendem ein- bis mehrfachem Homogenisieren in den o. g. Gerätschaften. Insbesondere hat sich das Einarbeiten bei erhöhten Temperaturen gegebenenfalls bis ca. 200°, anschließendes Abkühlen und mehrmaligem (zwei oder mehr) Homogenisieren als besonders bevorzugt erwiesen. Vor dem Homogenisieren erweist sich die Abkühlung der angeteigten Masse als zweckmäßig. Im Gegensatz zu nach anderen Verfahren erhaltenen Polyharnstoff-Partikeln ist dabei erfindungsgemäß die Anwendung hoher Drücke nicht erforderlich. Mithin ist der Energieeinsatz bei der Herstellung bedeutend geringer. Gleichwohl ist es im Rahmen der Erfindung möglich, die Suspension der erfindungsgemäß erhältlichen Harnstoffpartikel bei Bedarf einer zusätzlichen Behandlung mit einem Hochdrockhomogenisator, wie einem sogenannten APV-Homogenisator, zu unterwerfen. Dabei kann bei Bedarf die mittlere Partikelgröße der Polyharnstoffpartikel weiter auf etwa 1 bis 1 0 µm, bevorzugt 5 bis 1 0 µm herabgesetzt werden. Die Anwendung des Hochdruckhomogenisators führt zu einer weitgehenden Deagglomerierung der (Poly)harnstoffpartikel. Dadurch wird die mittlere Partikelgröße der (Poly)harnstoffpartikel im wesentlichen auf die mittlere Partikelgröße der Primärpartikel reduziert von etwa 1 bis 1 0 µm verringert. Die Erfindung betrifft somit auch die Verwendung von Hochdruckhomogenisatoren zur Herstellung von insbesondere Polyharnstoffdispersionen in Basisölen bzw, Lösungsmitteln.

Durch die Verwendung des erfindungsgemäßen, besonders feinteiligen (Poly)harnstoffpulvers mit hoher spezifischer Oberfläche erfordert das Einarbeiten des (Poly)harnstoffpulvers wesentlich weniger Energie als die Einarbeitung eines mittels Vermahlen hergestellten (Poly)harnstoffpulvers. Außerdem werden zur Erzielung gleicher Viskositäten geringere Mengen des (Poly)harnstoffpulvers erforderlich.

Die vorliegende Erfindung betrifft weiterhin die Verwendung der erfindungsgemäßen (Poly)harnstoffpulver als Verdickungsmittel. Die erfindungsgemäßen (Poly)harnstoffpulver können beispielsweise als Verdickungsmittel in folgenden Anwendungen benutzt werden: Farben, Lacke, Pasten, Fette, Klebstoffe, Lösungen, Lebensmittelanwendungen bzw. Lebensmittelzusammensetzungen etc.

Besonders bevorzugt werden die erfindungsgemäßen (Poly)harnstoffpulver als Verdickungsmittel in Schmiermitteln verwendet.

Die erfindungsgemäßen (Poly)harnstoffpulver werden dabei bevorzugt in Mengen von etwa 5 bis 25 Gew.-%, bezogen auf die Gesamtmenge des Basisöls verwendet.

Die vorliegende Erfindung betrifft weiterhin Schmiermittel, die die erfindungsgemäßen (Poly)harnstoffpulver, mindestens ein Basisöl sowie gegebenenfalls weitere für Schmiermittel übliche Hilfs- und Zusatzstoffe enthalten. Diese üblichen Hilfs- und Zusatzstoffe schließen beispielsweise ein: Korrosionsinhibitoren, Hochdruckadditive, Antioxidantien, sogenannte Friction Modifier, Verschleißschutzadditive etc.. Eine Beschreibung der in Schmierfetten verwendeten Additive findet sich beispielweise in Boner, "Modern Lubricating Greases", 1976, Kapitel 5.

In einer besonderen Ausführungsform betrifft die Erfindung eine Zusammensetzung insbesondere zur Verwendung als Schmiermittel, die mindestens ein erfindungsgemäßes (Poly)harnstoffpulver, mindestens ein Basisöl sowie mindestens einen weiteren Verdicker bzw. Eindicker enthält. Typische weitere in Schmierfettformulierungen verwendete Verdickungsmittel bzw. Eindicker schließen insbesondere die Alkalimetallseifen, Tone, Polymere, Asbest, Ruß, Kieselgele und Aluminiumkomplexe ein.

Erfindungsgemäß bevorzugt sind die sogenannten Seifenfette. Dabei handelt es sich insbesondere um Metallsalze von insbesondere einwertigen, gegebenenfalls substituierten vorzugsweise höheren (>C8) Carbonsäuren, wobei auch Mischungen von Metallsalzen der Carbonsäuren verwendet werden können. Es sind dies insbesondere Metallsalze von Carbonsäuren mit Alkali- und Erdalkalimetallen, wie Natrium, Kalium, Lithium, Calcium, Magnesium, Barium oder Strontium aber auch mit anderen Metallen wie beispielsweise Aluminium und Zink. Lithium- und Calciumseifen sind am verbreitetsten. Einfache Seifenschmierfette sind aus den Alkalimetallsalzen langkettiger Fettsäuren (mindestens C8) gebildet, wobei Lithium-12-hydroxystearat, das Häufigste, aus 12-Hydroxystearinsäure, Lithiumhydroxidmonohydrat, und Mineralöl gebildet ist. Komplexe Seifenfette werden auch weitverbreitet eingesetzt und umfassen Metallsalze einer Mischung organischer Säuren. Ein typisches komplexes Seifenschmierfett, das heutzutage eingesetzt wird, ist ein komplexes Lithiumseifenschmierfett, das aus 12-Hydroxystearinsäure, Lithiumhydroxidmonohydrat, Azelainsäure und Mineralöl hergestellt ist. Die Lithiumseifen sind in vielen Patenten einschließlich US-A-3 758 407, US-A-3 791 973, US-A-3 929 651 und US-A-4 392 967 beschrieben, in denen auch Beispiele angegeben sind.

Das Gewichtsverhältnis Gewicht Seifenfette zu Gewicht Polyharnstoffe kann erfindungsgemäß von 100 : 1 bis 1 : 100 betragen. Die Attraktivität der erfindungsgemäß hergestellten (Poly)harnstoffpulver bei der Abmischung mit Seifenfetten besteht insbesondere darin, dass man anders als in den via in situ-Verfahren hergestellten PU-Fetten hier das isolierte trockene Polyharnstoff-Pulver in die Seifenfett-Formulierungen einfügen kann und deren Eigenschaften dort gezielt beeinflussen kann. Versuche zeigen, dass durch das Zumischen von 2 % Polyharnstoff-Fett zu Lithium-Seifenfetten überraschend eine Verringerung der Penetration und damit eine Verbesserung der Konsistenz des Fettes erreicht. Weiterhin wird der Tropfpunkt gegenüber dem reinen Lithium-Seifenfett erhöht.

Die vorliegende Erfindung wird durch die folgenden Beispiele veranschaulicht.

### BEISPIELE

### Polyharnstoff:

1410,75g 2,4-,2,6-Tolylendiisocyanat werden einer Mischung von 473,1 5g Hexamethylendiamin und 2116,10g Stearylamin, gelöst in 10,8 kg Ethylacetat unter ständigem Rühren zugesetzt.
Die erhaltene Suspension wird im Anschluss einer Sprühtrocknung unterworfen. Hierbei wird bei einem Zerstäubungsdruck von 3 bar und einer Eintrittstemperatur von 140°C mit Stickstoff als Trägergas die Suspension getrocknet.

Das erhaltene Trockenpulver wird 15%-ig in naphthenischem Mineralöl suspendiert, angeteigt und im Dreiwalzenstuhl homogenisiert.

Man erhält ein Fett mit deutlich verbesserter Langzeit-Konsistenz (Walkpenetration Pw,60.000) gegenüber einem "in-situ" gefertigten Fett.

### Konsistenzbestimmung:

| | Ruhepenetration | Walkpenetration | |
|---|---|---|---|
| | Pu | Pw, 60 | Pw,60.000 |
| In-situ-Fett (Vergleich) | 183 | 208 | 285 |
| Fett aus sprühgetrocknetem Polyharnstoff (Erfindung) | 222 | 220 | 244 |

Die Konsistenz eines Fettes wird bestimmt, indem die Konuspenetration nach ISO 21 37 an einer Probe Fett ermittelt wird. Die Konuspenetration entspricht hierbei der Eindringtiefe eines zylindrischen Konus in die Fettprobe nach 5s, gemessen in 1/10mm, - je höher der Wert, desto größer die Eindringtiefe, desto geringer die Fettkonsistenz. Dabei unterscheidet man zwischen der Ruhepenetration Pu und der Walkpenetration Pw,60 bzw. Pw,60.000. Die Ruhepenetration wird am unbehandelten Fett ermittelt. Die Walkpenetration wird bestimmt, nachdem die Probe mit 60 Hüben (Pw,60) bzw. 60.000 Hüben (Pw,60,000) gewalkt wurde. Die Differenz beider Walkpenetrationen stellt ein in der Praxis bewährtes Maß für die Fettstabilität unter andauernder Belastung dar. Je geringer die Differenz ausfällt, desto beständiger ist die Fettprobe gegen Belastung,

Die Teilchengrößenbestimmung mittels Lichtstreumethode ergibt einen Mittelwert D[v, 0.5] von 24,1 8 µm, worin auch die Agglomeratteilchengrößen mit einfließen, Diese unter Einschluss der Agglomerate äußerst geringe mittlere Teilchengröße wird durch Rasterelektronenmikroskopie bestätigt (Abb. 1). Abb. 1 zeigt deutlich, dass die Mehrzahl der Primärpartikel erheblich kleiner als der Skalenwert von 30 µm ist, nämlich im Bereich von etwa 1 bis 1 0 µm liegt.

## Patentansprüche

1. Verfahren zur Herstellung eines (Poly)harnstoffpulvers, **dadurch gekennzeichnet, dass** eine Suspension von (Poly)harnstoffpartikeln in mindestens einem organischen Lösungsmittel der Sprühtrocknung unterworfen wird, wobei die (Poly)harnstoffpartikel aus der Umsetzung mindestens eines (Poly)isocyanates, mindestens eines (Poly)amins und gegebenenfalls mindestens eines Monoamin resultieren.

2. Verfahren nach Anspruch 1 , **dadurch gekennzeichnet, dass** der (Poly)harnstoff aus einer Monoharnstoff-Verbindung und einer Polyharnstoff-Verbindung ausgewählt wird.

3. Verfahren nach Anspruch 1 oder 2, **dadurch gekennzeichnet, dass** die Suspension ein Gewichtsverhältnis der (Poly)harnstoffpartikel zum Gesamtgewicht der Lösungsmittel von 10 : 100 bis 80 : 100 aufweist.

4. Verfahren nach einem der Ansprüche 1 bis 3, **dadurch gekennzeichnet, dass** das organische Lösungsmittel ausgewählt wird, aus der Gruppe, die aus gegebenenfalls substituierten geradkettigen, verzweigten oder cyclischen, aliphatischen oder aromatischen Kohlenwasserstoffen besteht.

5. Verfahren nach Anspruch 4, worin die Polyisocyanate aus der Gruppe ausgewählt werden, die besteht aus: 2,4'- und 4,4'-Diisocyanatodiphenylmethan (MDI), Hexamethylendilsocyanat (HDI), Toluoldiisocyanat (TDI), Polymethylenpolyphenylisocyanat (PMDI), Naphthylendiisocyanat (NDI), Dicyclohexylmethan-4,4'-diisocyanat und Isophorondiisocyanat (IPDI).

6. Verfahren nach Anspruch 4, worin die Mono- bzw. Polyamine aus der Gruppe ausgewählt werden, die besteht aus: Ethylendiamin, 1,2-Propylendiamin, 1 ,3-Propylendiamin, Phenylendiamin, Diethyltoluylendiamin, 2-Methylpentamethylendiamin, Butylamin, Hexylamin, Oktylamin, Stearylamin, Oleylamin, Tridecylamin, Cocosfettamin, Anilin, Isopropylanilin, N,N-Diethylanilin, p-Toluidin, Cyclohexylamin, Dioctyldiphenylamin, Diethylentriamin, Triethylentetramin, Tetraethylenpentamin, Pentaethylenhexamin, Polyethylenimin mit Molgewichten zwischen 250 und 10.000, 2,4-Diaminotoluol, 2,6-Diaminotoluol, Bis-(4-amino-phenyl)-methan, Polymethylenpolyphenylamin und aminogruppenhaltige Polyether, mit einem Gehalt an primären oder sekundären Aminogruppen von 1 bis 8 mmol/g und Molgewichten zwischen 250 und 2000.

7. Verfahren nach einem der Ansprüche 5 bis 6, **dadurch gekennzeichnet, dass** neben Polyaminen weitere gegenüber Isocyanaten reaktive polyfunktionelle Verbindungen verwendet werden.

8. Verfahren nach einem der Ansprüche 1 bis 7, **dadurch gekennzeichnet, dass** die Polyharnstoffpartikel aus Polyharnstoff mit einer massenmittleren Molekülmasse von 500 bis 20.000, bestimmt durch Gelpermeationschromatographie gegen Polystyrol als Standard von 200 bis 2.000.000, bestehen.

9. Verfahren nach einem der Ansprüche 1 bis 8, worin die Spühtrocknung bei einer Temperatur im Bereich von 90°C bis 140°C durchgeführt wird.

10. Verfahren nach einem der Ansprüche 1 bis 9, **dadurch gekennzeichnet, dass** das erhaltene (Poly)harnstoffpulver eine mittlere Partikelgröße von weniger als 50 µm aufweist.

11. (Poly)harnstoffpulver, erhältlich durch Umsetzung mindestens eines (Poly)isocyanats mit mindestens einem (Poly)amin sowie gegebenenfalls mindestens einem Monoamin In einem organischen Lösungsmittel und anschließende Durchführung des Verfahrens nach einem der Ansprüche 1 bis 10 in demselben organischen Lösungsmittel.

12. (Poly)harnstoffpulver nach Anspruch 11, das eine spezifische Oberfläche von mehr als 20 m²/g (gemessen durch Hg-Porosimetrie) aufweist.

13. Zusammensetzung, enthaltend (Poly)harnstoffpulver nach einem der Ansprüche 11 oder 12, suspendiert in mindestens einem Basisöl und/oder Lösungsmittel.

14. Zusammensetzung nach Anspruch 13, **dadurch gekennzeichnet, dass** das Basisöl ausgewählt wird aus der Gruppe, die aus Mineralölen und synthetischen und natürlichen Ölen besteht.

15. Zusammensetzung nach Anspruch 13 oder 14, enthaltend bezogen auf die Gesamtmenge des Basisöls bzw. des Lösungsmittels von 2 bis 25 Gew.-% des (Poly)harnstoffs.

16. Verfahren zur Herstellung der Zusammensetzung nach einem der Ansprüche 13 bis 15, welches das Suspendieren des (Poly)harnstoffpulvers nach einem der Ansprüche 11 oder 12 in mindestens einem Basisöl und/oder Lösungsmittel umfasst.

17. Verfahren nach Anspruch 16, worin man die Suspension des (Poly)harnstoffpulvers in mindestens einem Basisöl und/oder Lösungsmittel der Behandlung in einem Hochdruckhomogenisator unterwirft.

18. Zusammensetzung, erhältlich nach Anspruch 17.

19. Zusammensetzung nach Anspruch 18, worin die mittlere Partikelgröße im Bereich von 1 bis 10 µm liegt.

20. Verwendung der (Poly)harnstoffpulver nach einem der Ansprüche 11 oder 12 als Verdickungsmittel.

21. Verwendung der (Poly)harnstoffpulver nach einem der Ansprüche 11 oder 12 in Schmiermitteln.

22. Verwendung der Zusammensetzung nach einem der Ansprüche 13 bis 16 oder 18 als Schmiermittel, Verdickungsmittel und/oder Verarbeitungshilfsmittel in Lacken, Farben, Klebstoffen, Pasten, oder Lösungen.

23. Schmiermittel, enthaltend (Poly)harnstoffpulver nach einem der Ansprüche 11 oder 1 2, mindestens ein Basisöl sowie gegebenenfalls weitere für Schmiermittel übliche Hilfs- und Zusatzstoffe.

24. Schmiermittel nach Anspruch 23, enthaltend (Poly)harnstoffpulver nach einem der Ansprüche 11 oder 12, mindestens ein Basisöl sowie mindestens einen weiteren Verdicker.

## Claims

1. Process for the preparation of a (poly)urea powder, **characterised in that** a suspension of (poly)urea particles in at least one organic solvent is subjected to spray drying, wherein the (poly)urea particles result from the reaction of at least one (poly)-isocyanate, at least one (poly)amine and optionally at least one monoamine.

2. Process according to claim 1, **characterised in that** the (poly)urea is selected from a monourea compound and a polyurea compound.

3. Process according to claim 1 or 2, **characterised in that** the suspension has a weight ratio of the (poly)-urea particles to the total weight of the solvent of from 10 : 100 to 80 : 100.

4. Process according to any one of claims 1 to 3, **characterised in that** the organic solvent is selected from the group consisting of optionally substituted straight-chained, branched or cyclic, aliphatic or aromatic hydrocarbons.

5. Process according to claim 4, wherein the polyisocyanates are selected from the group consisting of: 2,4'- and 4,4'-diisocyanatodiphenylmethane (MDI), hexamethylene diisocyanate (HDI), toluene diisocyanate (TDI), polymethylenepolyphenyl isocyanate (PMDI), naphthylene diisocyanate (NDI), dicyclohexanemethane 4,4'-diisocyanate and isophorone diisocyanate(IPDI).

6. Process according to claim 4, wherein the mono- and poly-amines are selected from the group consisting of: ethylenediamine, 1,2-propylenediamine, 1,3-propylenediamine, phenylenediamine, diethyltoluylenediamine, 2-methylpentamethylenediamine, butylamine, hexylamine, octylamine, stearylamine, oleylamine, tridecylamine, coconut fatty amine, aniline, isopropylaniline, N,N-diethylaniline, p-toluidine, cyclohexylamine, dioctyldiphenylamine, diethylenetriamine, triethylenetetramine, tetraethylenepentamine, pentaethylenehexamine, polyethyleneimine having molar weights of from 250 to 10,000, 2,4-diaminotoluene, 2,6-diaminotoluene, bis-(4-amino-phenyl)-methane, polymethylene-polyphenylamine and amino-group-containing polyethers having a content of primary or secondary amino groups of from 1 to 8 mmol/g and molar weights of from 250 to 2000.

7. Process according to either claim 5 or claim 6, **characterised in that**, in addition to polyamines, further polyfunctional compounds that are reactive towards isocyanates are used.

8. Process according to any one of claims 1 to 7, **characterised in that** the polyurea particles consist of polyurea having a mass-average molecular mass of from 500 to 20,000, determined by gel permeation chromatography against polystyrene as standard from 200 to 2,000,000.

9. Process according to any one of claims 1 to 8, wherein the spray drying is carried out at a temperature in the range from 90°C to 140°C.

10. Process according to any one of claims 1 to 9, **characterised in that** the resulting (poly)urea powder has a mean particle size of less than 50 µm.

11. (Poly)urea powder, obtainable by reacting at least one (poly)isocyanate with at least one (poly)amine and optionally at least one monoamine in an organic solvent and then carrying out the process according to any one of claims 1 to 10 in the same organic solvent.

12. (Poly)urea powder according to claim 11 having a specific surface area of more than 20 m²/g (measured by Hg porosimetry).

13. Composition containing (poly)urea powder according to either claim 11 or claim 12 suspended in at least one base oil and/or solvent.

14. Composition according to claim 13, **characterised in that** the base oil is selected from the group consisting of mineral oils and synthetic and natural oils.

15. Composition according to claim 13 or 14, comprising from 2 to 25 wt.% of the (poly)urea, based on the total amount of base oil or solvent.

16. Process for the preparation of the composition according to any one of claims 13 to 15, which comprises suspending the (poly)urea powder according to either claim 11 or claim 12 in at least one base oil and/or solvent.

17. Process according to claim 16, wherein the suspension of the (poly)urea powder in at least one base oil and/or solvent is subjected to treatment in a highpressure homogeniser.

18. Composition obtainable according to claim 17.

19. Composition according to claim 18, wherein the mean particle size is in the range from 1 to 10 µm.

20. Use of the (poly)urea powder according to either claim 11 or claim 12 as a thickening agent.

21. Use of the (poly)urea powder according to either claim 11 or claim 12 in lubricants.

22. Use of the composition according to any one of claims 13 to 16 or 18 as a lubricant, thickening agent and/or processing aid in lacquers, paints, adhesives, pastes or solutions.

23. Lubricant comprising (poly)urea powder according to either claim 11 or claim 12, at least one base oil and optionally further auxiliary substances and additives conventional for lubricants.

24. Lubricant according to claim 23 comprising (poly)urea powder according to either claim 11 or claim 12, at least one base oil and at least one further thickener.

## Revendications

1. Procédé de production d'une poudre de (poly)-urée, **caractérisé en ce qu'**une suspension de particules de (poly)urée dans au moins un solvant organique est soumise au séchage par pulvérisation, les particules de (poly)urée résultant de la transformation d'au moins un (poly)isocyanate, d'au moins une (poly)amine et éventuellement d'au moins une mono-amine.

2. Procédé selon la revendication 1, **caractérisé en ce que** la (poly)urée est choisie parmi un composé de mono-urée et un composé de poly-urée.

3. Procédé selon la revendication 1 ou 2, **caractérisé en ce que** la suspension présente un rapport en poids des particules de (poly)urée au poids total du solvant de 10:100 à 80:100.

4. Procédé selon l'une quelconque des revendications 1 à 3, **caractérisé en ce que** le solvant organique est choisi dans le groupe qui est constitué d'hydrocarbures à chaîne linéaire, ramifiée ou cycliques, aliphatiques ou aromatiques, les hydrocarbures étant éventuellement substitués.

5. Procédé selon la revendication 4, dans lequel le polyisocyanate est choisi dans le groupe constitué des 2,4'- et 4,4'-diisocyanate de diphényl-méthylène (MDI), diisocyanate d'hexaméthylène (HDI), diisocyanate de toluène (TDI), isocyanate de polyméthylène-polyphényle (PMDI), diisocyanate de naphtalène (NDI), 4,4'-diisocyanate de dicyclo-hexylméthane et diisocyanate d'isophorone (IPDI).

6. Procédé selon la revendication 4, dans lequel les mono- ou polyamines sont choisies dans le groupe comprenant l'éthylène-diamine, la 1,2-propylène-diamine, la 1,3-propylène-diamine, la phénylène-diamine, la diéthyltoluène-diamine, la 2-méthylpentaméthylène-diamine, la butylamine, l'hexylamine, l'octylamine, la stéarylamine, l'oleylamine, la tridécylamine, l'amine de graisse de coco, l'aniline, l'isopropylaniline, la N,N-diéthylaniline, la p-toluidine, la cyclohexylamine, la dioctyldiphénylamine, la diéthylènetriamine, la triéthylène-tétramine, la tétraéthylène-pentamine, la penta-éthylène-hexamine, la polyéthylène-imine avec un poids moléculaire compris entre 250 et 10 000, le 2-4-diaminotoluène, le 2,6-diaminotoluène, le bis-(4-amino-phényl)-méthane, la polyméthylène-polyphénylamine et les polyéthers contenant des groupes amino présentant une teneur en groupes amino primaires ou secondaires de 1 à 8 mmoles/g et des poids moléculaires entre 250 et 2000.

7. Procédé selon l'une quelconque des revendications 5 à 6, **caractérisé en ce que**, parallèlement aux polyamines, d'autres composés polyfonctionnels réactifs à l'encontre des isocyanates sont utilisés.

8. Procédé selon l'une quelconque des revendications 1 à 7, **caractérisé en ce que** les particules de poly-urée sont constituées de poly-urée présentant un poids moléculaire moyen en poids de 500 à 20 000, déterminé par chromatographie par perméation de gel contre le polystyrène utilisé comme norme, de 200 à 2 000 000.

9. Procédé selon l'une quelconque des revendications 1 à 8, dans lequel le séchage par pulvérisation s'effectue à une température comprise entre 90°C et 140°C.

10. Procédé selon l'une quelconque des revendications 1 à 9, **caractérisé en ce que** la poudre de (poly)urée obtenue présente une taille de particule moyenne inférieure à 50 µm.

11. Poudre de (poly)urée pouvant être obtenue par transformation d'au moins un (poly)isocyanate avec au moins une (poly)amine et éventuellement, au moins une mono-amine dans une solution organique et ensuite, par réalisation du procédé selon l'une quelconque des revendications 1 à 10, dans le même solvant organique.

12. Poudre de (poly)urée selon la revendication 11, qui présente une surface spécifique supérieure à 20 m²/g (mesurée par porosimétrie Hg).

13. Composition contenant une poudre de (poly)-urée selon l'une quelconque des revendications 11 ou 12, en suspension dans au moins une huile de base et/ou un solvant.

14. Composition selon la revendication 13, **caractérisée en ce que** l'huile de base est choisie dans le groupe constitué par les huiles minérales et les huiles synthétiques et naturelles.

15. Composition selon la revendication 13 ou 14, contenant, par rapport à la quantité totale d'huile de base ou du solvant, de 2 à 25 % en poids de (poly)urée.

16. Procédé de production de la composition selon l'une quelconque des revendications 13 à 15, qui comprend la mise en suspension de la poudre de (poly)urée selon l'une quelconque des revendications 11 ou 12 dans au moins une huile de base et/ou un solvant.

17. Procédé selon la revendication 16, dans lequel on soumet la suspension de poudre (poly)-urée dans au moins une huile de base et/ou un solvant, à un traitement dans un homogénéisateur à haute pression.

18. Composition pouvant être obtenue selon la revendication 17.

19. Composition selon la revendication 18, dans laquelle la taille moyenne des particules est comprise entre 1 et 10 µm.

20. Utilisation de la poudre de (poly)urée selon l'une quelconque des revendications 11 ou 12 comme épaississant.

21. Utilisation de la poudre de (poly)urée selon l'une quelconque des revendications 11 ou 12 dans des lubrifiants.

22. Utilisation de la composition selon l'une quelconque des revendications 13 à 16 ou 18 comme lubrifiant, épaississant et/ou auxiliaire de traitement dans des vernis, des peintures, des colles, des pâtes ou des solutions.

23. Lubrifiant comprenant une poudre de (poly)-urée selon l'une quelconque des revendications 11 ou 12, au moins une huile de base et éventuellement d'autres auxiliaires et additifs pour lubrifiants.

24. Lubrifiants selon la revendication 23, comprenant une poudre de (poly)urée selon l'une quelconque des revendications 11 ou 12, au moins une huile de base et au moins un autre épaississant.
